(19) Europäisches Patentamt
European Patent Office
Office européen des brevets

(11) Veröffentlichungsnummer: **0 004 331**
**B1**

(12) # EUROPÄISCHE PATENTSCHRIFT

(45) Veröffentlichungstag der Patentschrift: **13.05.81**

(21) Anmeldenummer: **79100731.3**

(22) Anmeldetag: **12.03.79**

(51) Int. Cl.³: **C 07 F 9/141,**
C 07 F 9/201, C 07 F 9/15,
C 07 F 9/21, C 07 F 9/24,
C 07 F 9/65, C 08 K 5/51,
C 08 L 23/00, C 08 L 27/00

(54) **Mit Phenolcarbonsäuren veresterte Glyzerinphosphite, ihre Herstellung und Verwendung als Stabilisatoren für Kunststoffe.**

(30) Priorität: **17.03.78 DE 2811667**

(43) Veröffentlichungstag der Anmeldung:
**03.10.79 Patentblatt 79/20**

(45) Bekanntmachung des Hinweises auf die Patenterteilung:
**13.05.81 Patentblatt 81/19**

(84) Benannte Vertragsstaaten:
**BE CH DE FR GB NL**

(56) Entgegenhaltungen:
**FR - A - 2 136 589**
**FR - A - 2 359 151**
**US - A - 3 082 189**
**US - A - 3 288 819**
**US - A - 3 369 059**
**US - A - 3 763 287**

(73) Patentinhaber: **HOECHST AKTIENGESELLSCHAFT**
**Zentrale Patentabteilung Postfach 80 03 20**
**D-6230 Frankfurt/Main 80 (DE)**

(72) Erfinder: **Mayer, Norbert, Dr.**
**Ziegelgrundweg 17**
**D-8901 Gablingen (DE)**
Erfinder: **Pfahler, Gerhard, Dr.**
**Karlsbader Strasse 27**
**D-8900 Augsburg (DE)**
Erfinder: **Scheidl, Franz, Dr.**
**Hans-Fischer-Strasse 4**
**D-8906 Gersthofen (DE)**
Erfinder: **Wiezer, Hartmut, Dr.**
**Hans-Fischer-Strasse 6**
**D-8906 Gersthofen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 004 331 B1**

Courier Press, Leamington Spa, England.

# Mit Phenolcarbonsäuren veresterte Glyzerinphosphite, ihre Herstellung und Verwendung als Stabilisatoren für Kunststoffe

Seit langem werden zur Stabilisierung von Kunststoffen, insbesondere von Polyolefin sowohl Phenolverbindungen als auch Phosphite eingesetzt.

Als Phosphit-Stabilisatoren werden u.a. auch Phosphite des Glyzerins beschrieben (US—A—3 082 189). Diese Produkte haben bisher keinerlei Bedeutung auf dem Markt erringen können, vermutlich deshalb, weil sie hydrolyseempfindliche, hochviskose Flüssigkeiten darstellen, welche sich nur unter großem Aufwand zum Kunststoffgranulat zudosieren und darin homogen verteilen lassen.

In neuer Zeit wurde versucht, die Phosphit- und Phenol-funktion in einem einzigen Stabilisatormolekül zu vereinen, was z.B. bei den Estern aus Phenolcarbonsäuren und bizyklischem Pentaerythritphosphit der Fall ist (DE—A—2 219 695). Diese Verbindungen besitzen wiederum den schwerwiegenden Nachteil, daß sie hydrolyeempfindlich sind, so daß sie bereits durch die Luftfeuchtigkeit sowohl ihre Phosphitwirkung als auch die zur Entfaltung der Phenolwirksamkeit notwendige Verträglichkeit im Kunststoff einbüßen. Außerdem ist die Umesterungsreaktion von Phenolcarbonsäureestern mit bizyklischem Pentaerythritphosphit schwierig durchzuführen, weil die als Katalysatoren eingesetzten Basen durch Reaktion mit den sauren Phenolen in ihrer Wirksamkeit geschwächt werden, so daß die Reaktion nur langsam abläuft. Ähnliches gilt für gemischte Ester aus phosphorhaltigen Säuren, Hydroxyphenyl-substituierten Alkoholen und aliphatischen oder aromatischen Alkoholen (US—A—3 763 287). Auch diese Substanzen haben bisher keinerlei Bedeutung auf dem Markt erringen können. Es besteht daher nach wie vor ein Bedürfnis nach hydrolysfesten und in einer einfachen und schnell ablaufenden Reaktion darstellbaren Phenolgruppenhaltigen festen Phosphiten.

Überraschend hat sich herausgestellt, daß mit Phenolcarbonsäuren veresterte Glycerinphosphite, bei denen an den Phosphor noch Reste von langkettigen Alkoholen, Aminen, Mercaptanen oder Phenolverbindungen gebunden sind, eine ausreichende Hydrolysestabilität besitzen und auch die anderen Forderungen hinsichtlich der Wirksamkeit und der leichten Herstellbarkeit erfüllen.

Die Erfindung betrifft somit Substanzen der allgemeinen Formel

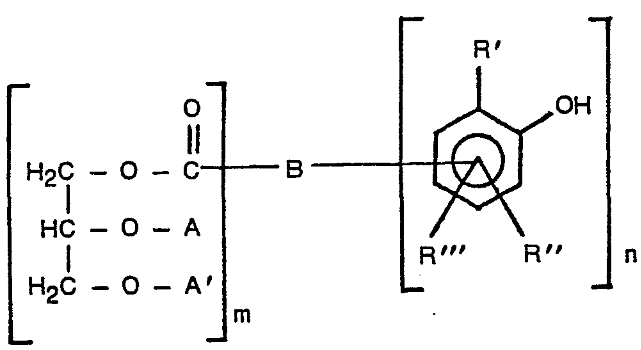

in der A und A′ für je einen einwertigen Rest der Struktur

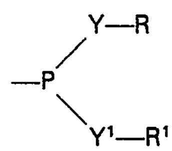

oder zusammen für einen einwertigen Rest der Struktur

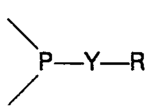

stehen, wobei in diesen Resten Y = —O—, —S— oder —NR′′′′— mit R′′′′ = H oder $C_1$— bis $C_{20}$-Alkyl ist, während

R die Bedeutung eines unverzweigten Alkylrestes mit 12 bis 30 C-Atomen sowie im Falle von Y = —O— auch die eines unverzweigten β-Hydroxyalkylrestes mit 12 bis 30 C-Atomen, oder eines 3-Thia-5-hydroxy-alkylrestes mit 12 bis 32 C-Atomen oder eines Mono- oder Di-$C_{12}$— bis $C_{30}$-Fettsäureesters des Dihydroxylpropylradikals hat, und —$Y^1$—$R^1$ entweder gleich —Y—R ist, oder für einen Rest der Struktur

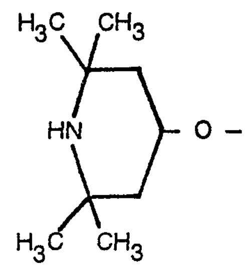 oder 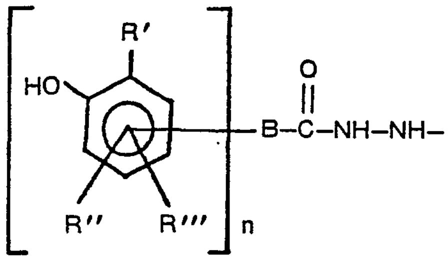

steht,

R', R'' und R''' unabhängig voneinander H oder $C_1$- bis $C_4$-Alkyl bedeuten, B eine chemische Bindung oder $\alpha$) den Rest eines geradkettigen oder verzweigten, unsubstituierten oder phenylsubstituierten Alkans mit 1 bis 20 C-Atomen oder $\beta$) eines unsubstituierten oder $C_1$- bis $C_5$-alkylsubstituierten, cycloaliphatischen Alkans mit 5 bis 12 C-Atomen, oder $\gamma$) eines unsubstituierten oder $C_1$- bis $C_{12}$-alkylsubstituierten aromatischen Kohlenwasserstoffes mit 6 oder 10 C-Atomen, oder $\delta$) eine Gruppe —B'—O—B''—, oder $\varepsilon$) eine Gruppe $-B'-\overset{\overset{O}{\|}}{C}-O-B''$-darstellen soll, wobei B' eine chemische Bindung oder der Rest eines geradkettigen, verzweigten oder cyclischen, unsubstituierten oder phenylsubstituierten Alkans mit 1 bis 20 C-Atomen oder eines unsubstituierten oder alkylsubstituierten Benzolkerns ist und B'' eine chemische Bindung oder einen geradkettigen oder verzweigten Alkylenrest mit 1 bis 6 C-Atomen bedeutet und sowohl m als auch n = 1 oder 2 ist.

Die in der allgemeinen Formel dargestellte phenolische Gruppierung entstammt einer Phenolcarbonsäure der Struktur.

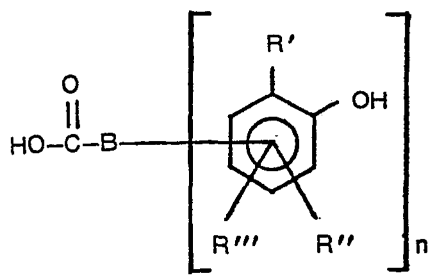 ,

wobei B, R', R'', R''' und n die oben angegebene Bedeutung besitzen. Solche Phenolcarbonsäuren mit n = 1 sind beispielsweise Salicylsäure, 3,5-Di-tert.-butyl-4-hydroxy-benzoesäure, 3,5-Di-tert.-butyl-4-hydroxy-phenylessigsäure, 3,5-Di-tert.-butyl-4-hydroxy-phenylpropionsäure und auch 2,4-Di-tert.-butyl-3-hydroxy-6-methylbenzoesäure und ihre Abwandlungsprodukte, die z.B. in der DE—A—2 445 306 näher beschrieben sind.

Phenolcarbonsäuren mit n = 2 sind Bis-hydroxyphenylcarbonsäuren, wie sie beispielsweise in der DE—A—2 544 014 näher beschrieben werden. Geeignet sind z.B. 3,3-Bis-(3'-tert.-butyl-4'-hydroxyphenyl)-butansäure, Bis-(3-tert.-butyl-4-hydroxyphenyl)-essigsäure, Bis-(3',5'-di-tert.-butyl-4'-hydroxyphenyl)-essigsäure, 2,2-Bis-(3'-tert.-butyl-4'-hydroxyphenyl)-cyclohexancarbonsäure-(1) oder auch 2,2-Bis-(3'-tert.-butyl-4'-hydroxyphenyl)-cyclohexyl-1-propionsäure.

Diese Verbindungsklasse wird bevorzugt, insbesondere Bis-(3-tert.-butyl-4-hydroxy-phenyl)-essigsäure und 2,2-Bis-(3'-tert.-butyl-4'-hydroxy-phenyl)-butansäure.

Beispiele für Hydroxyphenyldicarbonsäuren der allgemeinen Formel

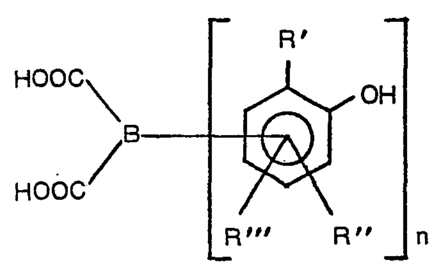

sind 2-(3',5'-Di-tert.-butyl-4'-hydroxy-phenyl)-malonsäure, 2,2-Bis-(3'-tert.-butyl-4'-hydroxy-phenyl)-bernsteinsäure und 2,2-Bis-(3'-tert.-butyl-4'-hydroxy-phenyl)-glutarsäure.

Beispiele für Äthergruppen enthaltende Phenolcarbonsäuren der Struktur

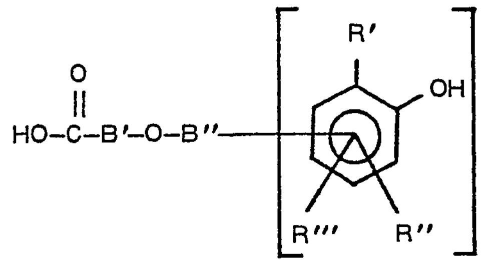

sind z.B. 3-tert.-Butyl-4-hydroxy-phenoxyessigsäure oder p-(3-tert.-Butyl-4-hydroxy-phenoxy)-benzoesäure.

Beispiele für Estergruppen enthaltende Phenolcarbonsäuren der Struktur

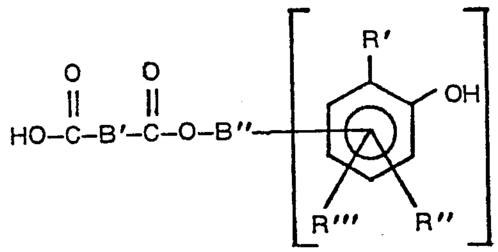

sind die bei der Umsetzung von alkylierten Dihydroxybenzolen mit Dicarbonsäurederivaten erhältlichen Monoester, wie etwa Phthalsäure-mono-(3,5-di-tert.-butyl-4-hydroxy-phenyl)-ester, Bernstein- bzw. Maleinsäure-mono-(3,6-di-tert.-butyl-4-hydroxy-phenyl)-ester oder auch Terephthalsäure-mono-(2-hydroxy-3,5-di-tert.-butylphenyl)-ester. Weitere Beispiele sind Monoester von Dicarbonsäuren mit dem gut zugänglichen 3,5-Di-tert.-butyl-4-hydroxy-benzylalkohol, 4-(m,m'-Di-tert.-butyl-p-hydroxy-phenyl)-butan-2-ol (DE—A—2 309 375), 3-(3',5'-Di-tert.-butyl-4'-hydroxy-phenyl)-propanol und 3,3-Bis-(3'-tert.-butyl-4'-hydroxy-phenyl)-butanol.

Die in der allgemeinen Formel für A und A' stehenden, an Phosphor gebundenen Reste —Y—R entstammen langkettigen Alkylverbindungen der Formel H—Y—R, welche eine funktionelle Gruppe mit aktivem Wasserstoff enthalten und im einzelnen sein können:

*α,β*-Diole der Struktur R—CH(OH)—$CH_2$OH mit einer Kettenlänge von 12 bis 32, vorzugsweise 20 bis 30 C-Atomen, oder auch Mischungen solcher Diole, die z.B. aus den Epoxiden langkettiger *α*-Olefine durch Hydrolyse in hoher Ausbeute zugänglich sind. Monoalkohole ROH mit einer Kettenlänge von 12 bis 40 C-Atomen, beispielsweise Fett- und Wachsalkohole, wie sie z.B. durch Hydrierung von Fett- und Wachssäuren zugänglich werden oder in natürlichen und fossilen Wachsen enthalten sind, oder auch die durch Oligomerisierung von Äthylen erhältlichen, unter dem Warenzeichen "Alfole"® im Handel befindlichen Synthesealkohole. Vorzugsweise zu nennen sind Stearyl- und Behenylalkohol (Docosanol). Des weiteren seien genannt 3-Thia-5-hydroxyalkylalkohole mit 12 bis 32 C-Atomen, die durch Addition von Mercaptoäthanol bzw. Thioglycerin an langkettige Epoxide erhalten werden, ferner Mono- oder Di-Fett- bzw. Wachssäureester des Glycerins, wobei die Säure eine Kettenlänge von 12 bis 30 C-Atomen besitzt, aliphatische primäre Mercaptane mit 12 bis 30, vorzugsweise 12 bis 20 C-Atomen wie beispielsweise Dodecylmercaptan oder Octadecylmercaptan sowie auch Amine der Struktur

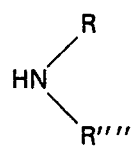

mit R'''' = H oder $C_1$- bis $C_{20}$-Alkyl und R = $C_{12}$- bis $C_{30}$-, vorzugsweise $C_{12}$- bis $C_{20}$-Alkyl, z.B. Laurylamin, bevorzugt Stearylamin, N-Methyl-stearylamin und Distearylamin. Verbindungen der Struktur R'—Y'—H sind der Alkohol der Formel (I) sowie Hydrazine der Formel (II)

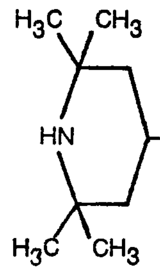 (I) oder 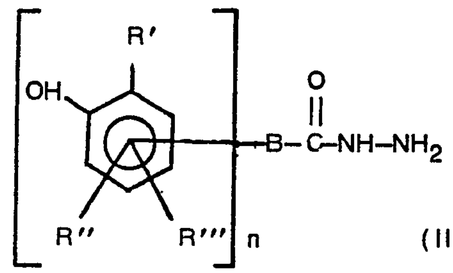 (II)

Verbindungen der Formel (II) sind aus der DE—A—2 711 206 bekannt. Besonders bevorzugt werden das 3′,5′-Di-tert.-butyl-4′-hydroxyphenyl-propionsäurehydrazid und das 3,3-Bis-(3′-tert.-butyl-4′-hydroxy-phenyl)-butansäurehydrazid.

Die Herstellung der als Ausgangssubstanzen dienenden Phenolcarbonsäure-Glycerinester kann nach üblichen Methoden aus den Phenolcarbonsäuren bzw. deren Estern mit Glycerin erfolgen. Bevorzugt bedient man sich der schnell und glatt ablaufenden Addition von Phenolcarbonsäuren an Glycid in Gegenwart eines basischen oder sauren Katalysators bei Temperaturen von etwa 50 bis 150°C, insbesondere 100 bis 130°C, die in folgender Weise abläuft:

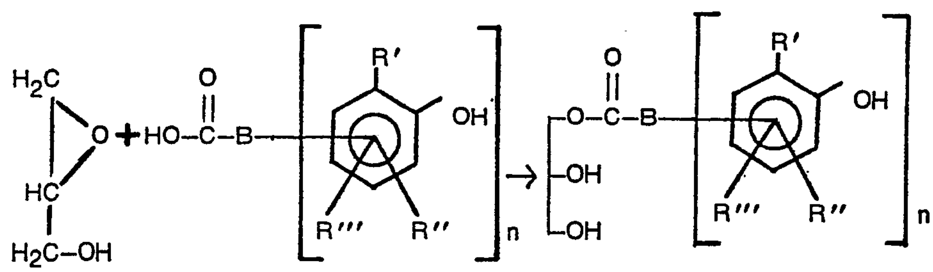

Die Reaktion kann ohne Lösungsmittel durchgeführt werden, sie läuft aber auch in Gegenwart von aromatischen oder aliphatischen Lösungsmitteln wie etwa Toluol oder Di-isobutylketon ab, wie z.B. in der DE—A—2 449 847 beschrieben ist. Bevorzugt und erfindungsgemäß wird die Umsetzung in der Schmelze einer der oben charakterisierten R—Y—H—Verbindungen, also von langkettigem Alkohol, Amin oder Mercaptan usw. bzw. von Mischungen dieser Substanzen, durchgeführt.

Ein besonderer Vorteil dieses bevorzugten Verfahrens liegt darin, daß nach beendeter Glycidaddition, für welche 30 Min. bis 2 Stunden benötigt werden und deren Endpunkt dünnschichtchromatographisch gut festzustellen ist, durch Zusatz eines Phosphorig säureesters mit einem leichtflüchtigen Alkohol oder Phenol die Umesterung und damit Verknüpfung mit der bei der Additionsreaktion als Reaktionsmedium dienenden R—Y—H-bzw. der gegebenenfalls noch zuzusetzenden $R^1$—$Y^1$—H-Verbindung über Phosphor zum Endprodukt unter Abdestillation des freigesetzten Alkohols oder Phenols durchgeführt werden kann, ohne daß die zeitraubende und kostspielige nachträgliche Entfernung eines Lösungsmittels notwendig wird. Das erfindungsgemäße Herstellverfahren ist somit ein sehr einfaches und damit konstengünstiges Eintopfverfahren.

Als phosphorhaltige Ausgangsmaterialien kommen Derivate der Phosphorigen Säure mit alkoholytisch abspaltbaren, leichtflüchtigen Substituenten, insbesondere Alkohol- und Aminsubstituenten, in Frage, z.B. bevorzugt Tri-niedrig-alkyl- bzw. Triarylphosphite beispielsweise Triphenylphosphit, Tripropylphosphit, und insbesondere Trimethyl- und Triäthylphosphit, ferner z.B. auch Hexamethylphosphorigsäuretriamid. Gegebenenfalls kann man auch $PCl_3$ einsetzen.

Die Glycidaddition ist durch basische Stoffe wie Di- und Trialkylamine, z.B. Triäthylamin, Triisopropanolamin, Alkalialkoholat, Alkaliamid, -hydrid oder Alkalihydroxid und gegebenenfalls auch durch saure, wie z.B. Ammoniumsalze, katalysierbare. Der Katalysator wird in Mengen von 0,01 bis etwa 5%, bezogen auf das Gewicht des Glycids, zugesetzt.

Die Temperatur bei der Phosphitumesterung liegt zwischen 80 und 210°C, vorzugsweise zwischen 120 und 180°C. Sie wird in der Regel so gewählt, daß der freigesetzte Alkohol zügig abdestilliert. Natürlich ist es auch möglich, und im Falle von hochsiedenden Alkoholen wie etwa Phenol auch vorteilhaft, die Abspaltung des Alkohols durch Anlegen von Vakuum zu unterstützen.

Die Mengen an Ausgangsmaterialien richten sich danach, welche Endprodukte erhalten werden sollen. Phenolcarbonsäure und Glycid werden stets in etwa äquivalentem Verhältnis miteinander umgesetzt. Die phosphorhaltige Komponente, die R—Y—H-und die $R^1$—$Y^1$—H-Komponenten werden in einer solchen Menge eingesetzt, daß entweder auf 1 Äquivalent des in der 1. Verfahrensstufe gebildeten Glycerinesters 1 Mol R—Y—H-Verbindung und 1 Mol phosphorhaltige Komponente treffen, wobei cyclische Phosphite resultieren, oder man setzt pro Äquivalent Glycerinester insgesamt 4 Mol R—Y—H-und $R^1$—$Y^1$—H-Komponente ein, wobei mindestens 1 Mol davon R—Y—H-Verbindung sein

muß, und läßt mit 2 Mol phosphorhaltiger Komponente reagieren. In diesem Fall entstehen offenkettige Glycerinester-Diphosphite.

Die Endprodukte erstarren beim Erkalten zu wachsartigen Festkörpern, welche ohne weitere Reinigung als Stabilisatoren eingesetzt werden können, was als besonderer Vorzug zu werten ist, wenngleich dieser Umstand natürlich bedingt, daß die erhaltenen Produkte nicht in jedem Fall chemischeinheitliche, von Nebenprodukten freie Stoffe sind.

Es ist möglich und in mancher Hinsicht vorteilhaft, die erhaltenen Produkte nach DE—A—2 753 136 mit Wachs zu coaten bzw. in der Schmelze zu mischen.

Neben der Tatsache, daß sich die Produkte gemäß der Erfindung sehr leicht herstellen lassen, ist ihre z. T. außerordentlich hohe Hydrolysefestigkeit hervorzuheben. Diese Eigenschaft war nicht vorhersehbar, denn die Massierung von stark polaren Gruppierungen auf eine engen Molekülabschnitt, so wie es bei einem Glycerinesterphosphit vorliegt, läßt im Gegenteil eine starke Hydrolysanfälligkeit erwarten.

Die erfindungsgemäßen phosphorhaltigen Glycerinester zeichnen sich des weiteren durch eine hohe Verfärbungsstabilität bei der Verarbeitung von thermoplastischen Kunststoffen aus. Auch dieser Umstand ist überraschend und war nicht vorhersehbar. Glycerinester neigen nämlich bei thermischer Belastung unter zweifacher $\beta$-Eliminierung zur Bildung von Acrolein, welches mit sich selbst unter Bildung von stark verfärbenden Harzen weiterreagiert. Aus der Chemie der Fette, welche ja Tris-carbonsäureglycerinester darstellen, ist dieses Verhalten wohlbekannt. Umso überraschender ist, daß eben diese an sich zu erwartende Erscheinung auch bei den hohen Temperaturen der Kunststoff-Verarbeitung nicht eintritt, sondern im Gegenteil eine außerordentlich wirksame Verfärbungsstabilisierung bei der Verwendung der erfindungsgemäßen Verbindungen zu beobachten ist.

Hervorzuheben ist weiterhin die gegenüber den handelsüblichen phenolischen Antioxidantien außerordentlich hohe Extraktionsfestigkeit der erfindungsgemäßen Phenolverbindungen aus dem Kunststoff, wenn er in Kontakt mit Öl- oder Fett-ähnlichen Substanzen gebracht wird. Diese Eigenschaft ist deshalb von entscheidender Bedeutung, weil einerseits der beabsichtigte Oxidationsschutz des Kunststoffs auch im Kontakt mit Ölen und Fetten gewährleistet ist und vor allem, weil darüber hinaus die äußerst unerwünschte Kontaminierung von gegebenenfalls in dem Kunststoff verpackten fett- oder ölhaltigen Lebensmitteln mit den Stabilisatoren unterbleibt.

Die erfindungsgemäßen Verbindungen steigern sowohl die Verarbeitungsstabilität als auch die Wärmealterungsbeständigkeit von Kunststoffen wie PVC und anderen chlorhaltigen Vinyl-Homo- und Copolymerisaten sowie insbesondere von $\alpha$-Olefin-Homo- und Copolymerisaten, z.B. Polyäthylen, Polypropylen oder Äthylen-Vinylacetat-Copolymeren. Sie werden in Mengen von 0,005 bis 5,0 Gewichtsteilen auf 100 Gewichtsteile Polymeres eingesetzt.

In chlorhaltigen Kunststoffen finden als Costabilitsatoren neben den erfindungsgemäßen Substanzen noch Metallsalze, Epoxidstabilisatoren, mehrwertige Alkohole und gegebenenfalls noch $\alpha$-Phenylindol Verwendung.

Unter als Stabilisatoren bekannten Metallverbindungen werden in diesem Zusammenhang verstanden: Calcium-, Barium-, Strontium-, Zink-, Cadmium-, Magnesium-, Aluminium- und Bleiseifen aliphatischer Carbonsäuren und -Oxycarbonsäuren mit etwa 12 bis 32 C-Atomen oder von Phenolsubstituierten aliphatischen Carbonsäuren, Salze der genannten Metalle mit aromatischen Carbonsäuren beispielsweise Benzoate, Salizylate sowie (Alkyl-)Phenolate dieser Metalle, ferner Organozinnverbindungen, wie z.B. Dialkylzinn-Thiolglykolate und -Carboxylate und die neuerdings bekannt gewordenen analogen Esterzinnderivate. Bekannte Epoxidstabilisatoren sind z.B. epoxidierte höhere Fettsäuren wie epoxidiertes Sojabohnenöl, Tallöl oder Leinöl sowie epoxidiertes Butyloleat und die Epoxide langkettiger $\alpha$-Olefine. Mehrwertige Alkohole können beispielsweise Pentaerythrit, Trimethylolpropan, Sorbit oder Mannt sein, d.h. bevorzugt Alkohole mit 5 oder 6 C-Atomen und 3 bis 6 OH-Gruppen.

Eine Stabilisatorkombination für die Verarbeitung halogenhaltiger plastischer Massen besteht beispielsweise aus 0,005 bis 5, vorzugsweise 0,05 bis 3 und insbesondere 0,1 bis 1 Gewichtsteilen einer oder mehrerer der erfindungsgemäßen Phosphitverbindungen, 0,1 bis 10, vorzugsweise 0,5 bis 5 Gewichtsteilen von als Stabilisatoren bekannten Metallverbindungen, 0,1 bis 10, vorzugsweise 0,5 bis 5 Gewichtsteilen eines bekannten Epoxidstabilisators und 0 bis 1 Gewichtsteil eines mehrwertigen Alkohols.

Die erfindungsgemäßen Phosphite zeigen insbesondere bei der Stabilisierung von Polyolefinen eine hervorragende Wirksamkeit. Ihre Verwendung als Stabilisatoren für Polyolefine ist daher bevorzugt. So wird z.B. die Licht- und Wärmestabilität von Polypropylen durch Zusatz üblicher Mengen (weniger als 1 Gew.-%) der erfindungsgemäßen Substanzen, gegebenenfalls in Gegenwart von phenolischen und evtl. sulfidischen Antioxidantien ganz erheblich verbessert.

Unter phenolischen und sulfidischen Stabilisatoren werden die üblichen, bei der Kunststoffverarbeitung verwendeten Wärmestabilisatoren verstanden, z.B. 3,5-Di-tert.-buty-4-hydroxyphenyl-propionsäureester, 2,6-Di-tert.-butyl-p-kresol, Alkyliden-bis-alkylphenole, Ester und Salze der Bis-(4'-hydroxy-3'-tert.-butylphenyl)-butansäure oder der Cycloalkyliden-bis-(alkylphenol)-carbonsäureester sowie Thiodipropionsäureester von Fettalkoholen oder Di-octadecylsulfid- und disulfid.

Eine Stabilisatorkombination für die Verarbeitung von halogenfreien Poly-$\alpha$-olefinen, wie z.B. Hoch-, Mittel- und Niederdruckpolymerisaten von $C_2$ bis $C_4$-$\alpha$-Olefinen, insbesondere Polyäthylen und Polypropylen, oder von Copolymerisaten derartiger $\alpha$-Olefine besteht aus beispielsweise 0,01 bis 2, vorzugsweise 0,05 bis 0,5 Gewichtsteilen eines Fett- oder Wachssäurecalciumsalzes, gegebenenfalls 0,005 bis 3, vorzugsweise 0,01 bis 1 Gewichtsteilen eines phenolischen Stabilisators, gegebenenfalls 0,005, vorzugsweise 0,01 bis 1 Gewichtsteilen eines sulfidischen Stabilisators, gegebenenfalls 0,005 bis 5, vorzugsweise 0,05 bis 1 Gewichtsteilen eines organischen Phosphits und 0,005 bis 5, vorzugsweise 0,05 bis 1 Gewichtsteilen einder oder mehrerer der erfindungsgemäßen Verbindungen. Falls erforderlich, können dieser Mischung noch spezielle Ultraviolett-Stabilisatoren in Mengen von 0,01 bis 3 Gewichtsteilen zugefügt werden. Aus der Vielzahl der handelsüblichen UV-Stabilisatoren seien beispielsweise genannt: Alkoxyhydroxybenzophenone, Hydroxyphenylbenztriazole, Salizylsäurephenolester, Benzoesäurehydroxyphenolester, Benzylidenmalonsäurenitrilester sowie sog. "Quencher" wie Nickelchelate, Hexamethylphosphorsäuretriamid, die als "HALS"-Produkte (hindered light stabilizers) bekannt gewordenen Piperidinstabilisatoren oder auch die Azaadamantane.

Mit Mischungen der erfindungsgemäßen Verbindungen und bekannten Stabilisatoren läßt sich nicht nur die Stabilität von Polyolefinen und von chlorhaltigen Polymeren verbessern, sondern auch die von Polyestern, Polyamiden, Phenol-Formaldehyd-Harzen, Epoxiharzen, Polyacrylnitril, Polycarbonat, Polysiloxanen, Polyäthern, Polyurethanen und SBR-Gummimischungen.

Die nachstehenden Beispiele sollen die Erfindung näher erläutern.

Beispiel 1

$\beta$-Hydroxytriacontyl-(3,5-di-tert.-butyl-4-hydroxy-benzoyl)-glycerinyl-phosphit

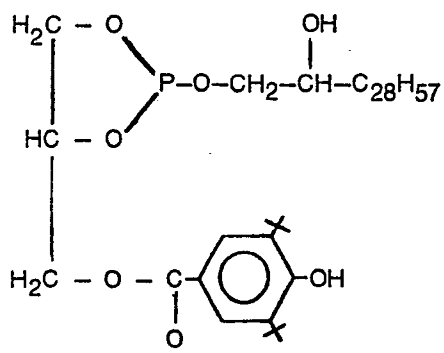

48 g (0,2 Mol) 3,5-Di-tert.-butyl-4-hydroxy-benzoesäure und 22,3 g (0,26 Mol) Glycid werden in Anwesenheit von 0,1 g KOH und 100 g (0,2 Mol) 1,2-Dihydroxy-triacontan (gewonnen durch Hydrolyse des nach DE—AS 2 436 817, Beispiele 9 bis 12 dargestellten $C_{30}$-Epoxids), welches bei diesem Verfahrensschritt nur die Funktion des Reaktionsmediums hat, bei 110°C unter Stickstoffatmosphäre zwei Stunden gerührt. Dünnschichtchromatographisch ist dann keine 3,5-Di-tert.-butyl-4-hydroxy-benzoesäure mehr nachweisbar. Nach kurzzeitigem Anlegen von Wasserstrahlvakuum zur Entfernung von nicht umgesetztem Glycid gibt man hierauf 34,8 g (0,105 Mol) Triäthylphosphit zu und destilliert bei 130 bis 180°C das aus der Umsetzung des Phosphits mit dem Glycerinester und dem Dihydroxytriacontan freigesetzte Äthanol über eine kurze Vigreux-Kolonne im leichten Stickstoffstrom ab, wobei die Badtemperatur so geregelt wird, daß die Abgangstemperatur an der Destillationsbrücke die Siedetemperatur von Äthanol (78°C) nicht überschreitet.

Nach Beendigung der Äthanolentwicklung legt man zur Entfernung von nicht umgesetztem Triäthylphosphit Vakuum an. Die Produktschmelze wird schließlich durch ein beheiztes Druckfilter filtriert. Man erhält 130 g eines Wachses mit einem Fließ-/Tropfpunkt von 86,5 bis 87,5°C.

Beispiele 2 bis 12

In völliger Analogie zu der in Beispiel 1 beschriebenen Verfahrensweise wurden Verbindungen der allgemeinen Formel

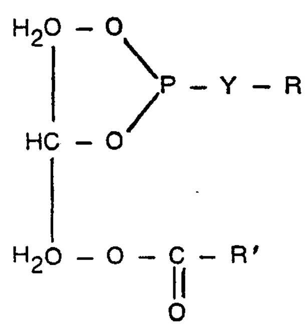

aus jeweils 1 Mol Glycid, Phenolcarbonsäure, R—Y—H-Komponente und Phosphit dargestellt, wobei sich die Bedeutung von R und R' aus den in nachfolgender Tabelle aufgeführten Reaktionskomponenten ergibt. Dabei bedeutet das Symbol → den tert. Butylrest.

| Bsp. Nr. | Ausgangsmaterial | | Endprodukt Flp/Trp (°C) |
|---|---|---|---|
| | R – Y – H | R' – COOH | |
| 2 | $C_{18}H_{37}$–OH | 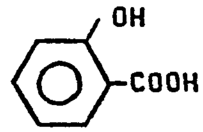 | 34/37 |
| 3 | $C_{18}H_{37}$–$NH_2$ | 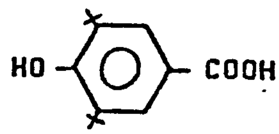 | 28/33 |
| 4 | $C_{18}H_{37}$–SH | 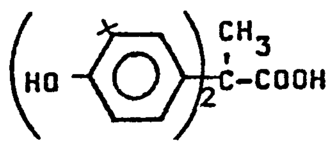 | 90/91,5 |
| 5 | $C_{28}H_{57}$–CHOH–$CH_2$OH | 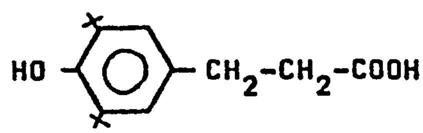 | 78/80 |
| 6 | dto. | 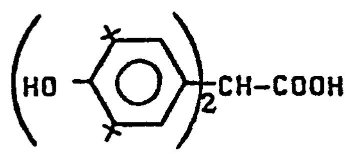 | 78/81 |
| 7 | $C_{18}H_{37}$–OH | 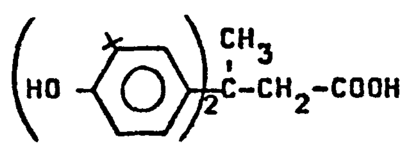 | 42/45 |
| 8 | $C_{28}H_{57}$–CHOH–$CH_2$OH | dto. | 81/85 |
| 9 | $C_{18}H_{37}$–OH | 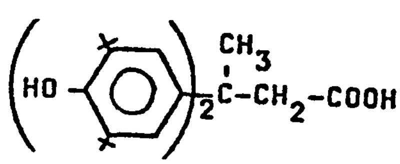 | 43/45 |

| Bsp. Nr. | Ausgangsmaterial | | Endprodukt Flp/Trp (°C) |
|---|---|---|---|
| | R – Y – H | R′ – COOH | |
| 10 | $C_{18}H_{37}$–OH | 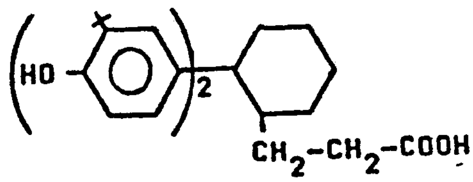 | 46/48 |
| 11 | dto. | 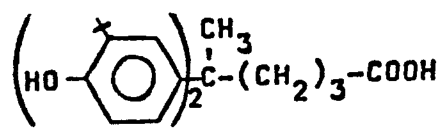 | 52/57 |
| 12 | dto. | 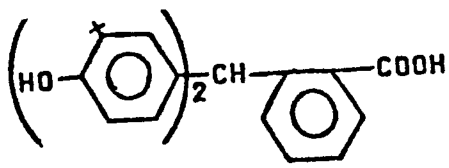 | 69/76 |

Beispiele 13 bis 27

Verbindungen der Formel

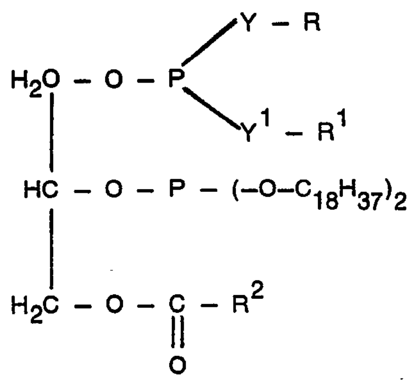

wurden analog zu Beispiel 1 dargestellt. Die Bedeutung von R, $R^1$ und $R^2$ ergibt sich aus der nachfolgenden Tabelle, in der das Symbol -+ jeweils einen tert. Butylrest bedeutet.

Es kamen zum Einsatz jeweils 1 Mol Phenolcarbonsäure, Glycid, R—Y—H und $R^1$—$Y^1$—H-Verbindung mit je 2 Mol Phosphit und 2 Mol Stearylalkohol.

| Beispiel Nr. | Ausgangsmaterial | | | Endprodukt Flp / Trp (°C) |
|---|---|---|---|---|
| | R – Y – H | $R^1 - Y^1 - H$ | $R^2 - \overset{O}{\overset{\|}{C}} - OH$ | |
| 13 | $C_{18}H_{37}$–OH | $C_{28}H_{57}$–CHOH–$CH_2OH$ | 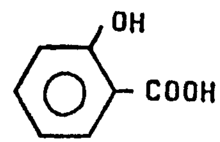 | 81 / 84 |
| 14 | dto. | dto. | 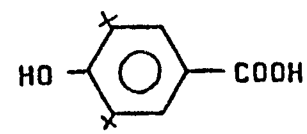 | 72 / 73 |
| 15 | $C_{28}H_{57}$CHOH–$CH_2OH$ | 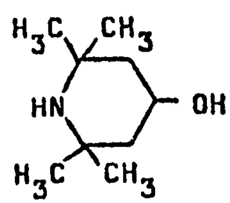 | dto. | 69 / 71 |
| 16 | $C_{18}H_{37}$–OH | 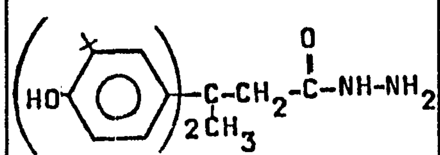 | dto. | 43 / 45 |

| Bespiel Nr. | Ausgangsmaterial | | | Endprodukt Flp / Trp (°C) |
|---|---|---|---|---|
| | R – Y – H | $R^1 - Y^1 - H$ | $R^2 - \overset{O}{\overset{\Vert}{C}} - OH$ | |
| 17 | $C_{18}H_{37}-OH$ | 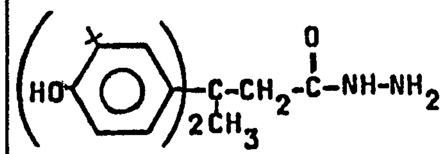 | 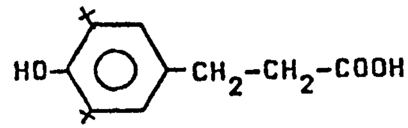 | 72 / 75 |
| 18 | dto. | dto. | 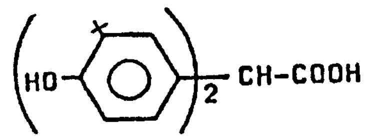 | 78 / 78,7 |
| 19 | dto. | dto. | 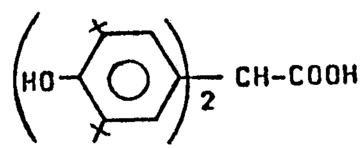 | 70 / 73 |
| 20 | dto. | 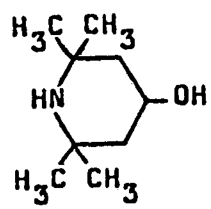 | 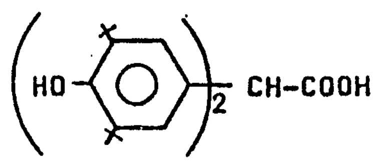 | 36 / 37 |
| 21 | dto. | $C_{12}H_{25}-SH$ | dto. | 30,5 / 31 |

| Beispiel Nr. | Ausgangsmaterial | | | Endprodukt Flp/Trp (°C) |
|---|---|---|---|---|
| | R – Y – H | $R^1 - Y^1 - H$ | $R^2 - \overset{\overset{O}{\parallel}}{C} - OH$ | |
| 22 | $C_{18}H_{37}-OH$ | $C_{18}H_{37}-OH$ | 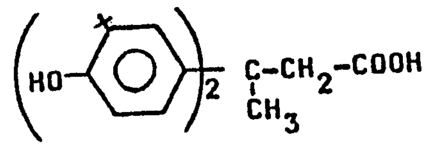 | 38/40 |
| 23 | dto. | $C_{18}H_{37}-NH_2$ | dto. | 72/78 |
| 24 | dto. | $C_{28}H_{57}-CHOH-CH_2OH$ | dto. | 79/80 |
| 25 | $C_{18}H_{37}-NH_2$ | $C_{18}H_{37}-NH_2$ | 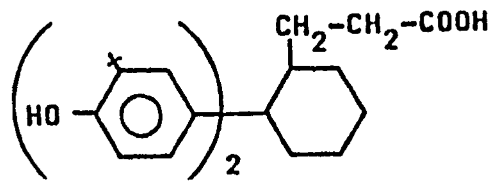 | 48/51 |
| 26 | $C_{18}H_{37}-OH$ | $C_{18}H_{37}-OH$ | 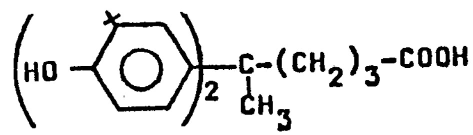 | 40/42 |
| 27 | $C_{18}H_{37}-OH$ | $C_{28}H_{57}-CHOH-CH_2OH$ | 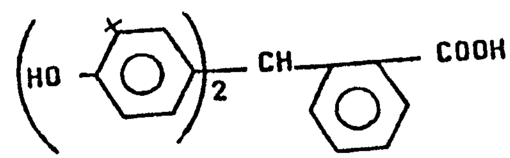 | 70,5/71 |

Beispiel 28

Die-stearyl-[2,2-bis-(3′-tert.-butyl-4′-hydroxy-phenyl)-glutaroyl]-bis-glycerinyl-diphosphit

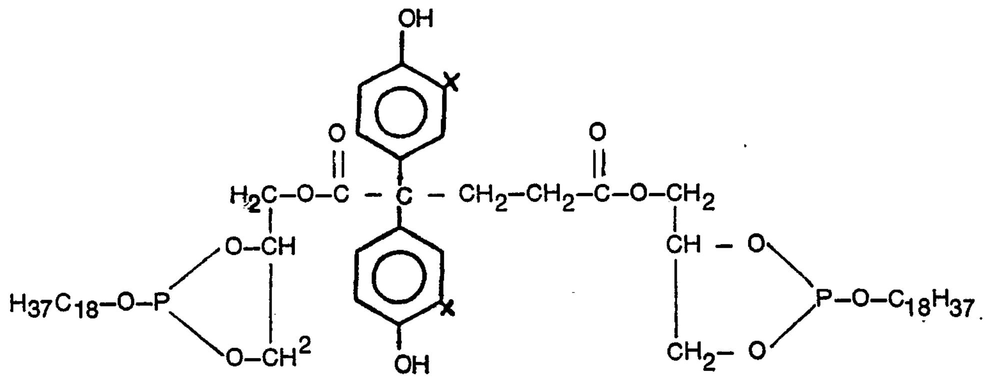

42,8 g (0,1 Mol) 2,2-Bis-(3′-tert.-butyl-4′-hydroxy-phenyl)-glutarsäure, 20 ml (22,3 g = 0,26 Mol) Glycid und 0,05 g KOH werden in 100 ml Toluol bei 100°C 90 Min. unter Stickstoff gerührt. Dann wird das Toluol abdestilliert und 36 ml (= 35 g = 0,21 Mol) Triäthylphosphit zugegeben, worauf die Innentemperatur auf ca. 110°C gesteigert wird. Sobald die Äthanolentwicklung einsetzt, werden 34 g (0,2 Mol) Stearylalkohol zugefügt und das freigesetzte Äthanol bei 150 bis 180°C in der in Beispiel 1 näher beschriebenen Weise über eine kurze Vigreux-Kolonne abdestilliert.

Das erhaltene Produkt hat einen Fließ-/Tropfpunkt von 34/35°C.

Beispiel 29

β - Hydroxytriacontyl - hepta - stearyl - [2,2 - bis - 3′ - tert.-butyl - 4′ - hydroxy - phenyl)-glutaroyl] - bis - glycerinyl - tetraphosphit

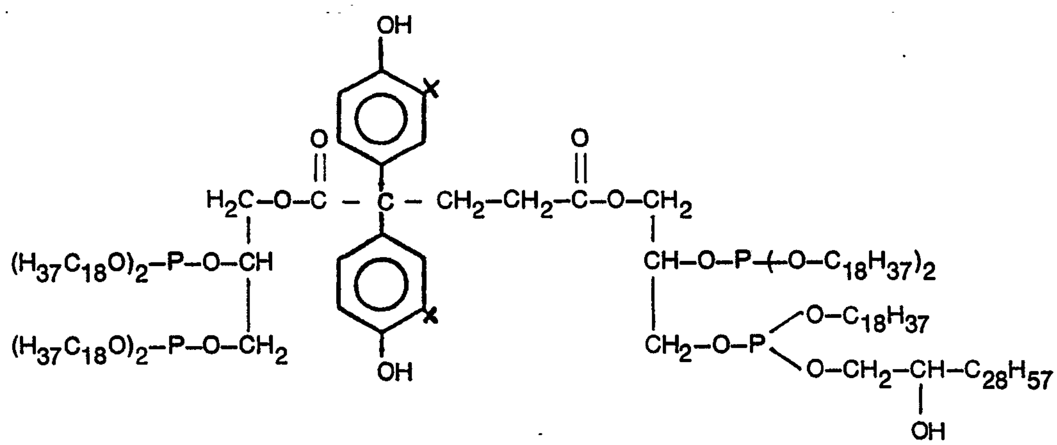

42,8 g (0,1 Mol) 2,2-Bis-(3′-tert.-butyl-4′-hydroxy-phenyl)-glutarsäure, 20 ml (= 22,3 g = 0,26 Mol) Glycid und 0,05 g KOH werden in 100 ml Toluol bei 100°C 90 Min. unter Stickstoff gerührt. Dann wird das Toluol abdestilliert und 72 ml (= 70 g = 0,42 Mol) Triäthylphosphit zugefügt, wobei die Innentemperatur auf etwa 110°C gehalten wird. Sobald die Äthanolentwicklung einsetzt, werden 189 g (0,7 Mol) Stearylalkohol und 50 g (0,1 Mol) 1,2-Di-hydroxytriacontan zugegeben und bei 130 bis 180°C das freigesetzte Äthanol in der in Beispiel 1 beschriebenen Weise abdestilliert.

Das erhaltene Produkt besitzt einen Fließ-/Tropfpunkt von 64/65°C.

Beispiel 30

*β* - Hydroxytriacontyl - hepta - stearyl - [2,2 - Bis - (5' - tert.butyl - 4' - hydroxy - malonyl]-bis - glycerinyl - tetraphosphit

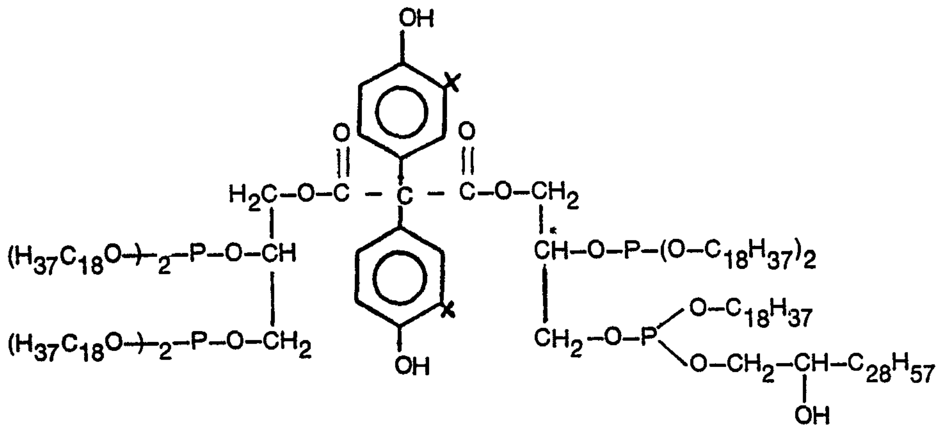

2,00 g (5 mMol) 2,2-Di-(3'-tert.-butyl-4'-hydroxyphenyl)-malonsäure und 1 ml (10 mMol) Glycid werden in 5 ml Toluol in Gegenwart einer Spur KOH unter Stickstoff 90 Min. bei 100°C gerührt. Das Toluol wird abdestilliert, der Rückstand mit 3,6 ml (20 mMol) Triäthylphosphit versetzt und die Temperatur auf ca. 110°C gesteigert. Sobald die Entwicklung von Äthanol einsetzt, werden 9,45 g (35 mMol) Stearylalkohol und 2,50 g (5 mMol) 1,2-Dihydroxytriacontan zugegeben, worauf man den Ansatz unter allmählicher Steigerung der Temperatur auf ca. 160°C bis zum Ende der Äthanolentwicklung weiterrührt. Man legt kurz Vakuum an und läßt abkühlen. Das erhaltene Produkt hat einen Fließ-/Tropfpunkt von 61/61,5°C.

Beispiel 31

Dieses Beispiel zeigt die überraschend hohe Hydrolysefestigkeit der erfindungsgemäßen Phosphite, die wie folgt geprüft wurde:

Je 5 g des zu prüfenden Produktes werden in 100 ml entsalztem Wasser 20 Minuten gekocht. Dann läßt man erkalten und filtriert die wäßrige Phase durch ein Faltenfilter ab. Aus dem Filtrat werden je zwei 20-ml-Proben abpipettiert und mit 0,1 n KOH gegen Bromphenolblau titriert.

Aus nachstehender Tabelle ist der jeweilige unter diesen Bedingungen ermittelte Hydrolysegrad als Quotient aus tatsächlichem Lauge-Verbrauch und theoretisch möglichem Lauge-Verbrauch bei vollständiger Hydrolyse zu entnehmen. Zum Vergleich wurde die Hydrolysestabilität einiger anderen, als Stabilisatoren bekannter Phosphite bestimmt.

| Phosphit nach Beispiel Nr. | Hydrolysegrad nach 20 minütigem Kochen (in % der Theorie) |
|---|---|
| 1 | 28 |
| 5 | 3 |
| 6 | 29 |
| Vergleiche: | |
| Di-stearyl-pentaerythrityl-diphosphit | 55 |
| Triphenylphosphit | 84 |
| Trisnonylphenylphosphit | 57 |
| Diphenyl-isooctylphosphit | 55 |
| 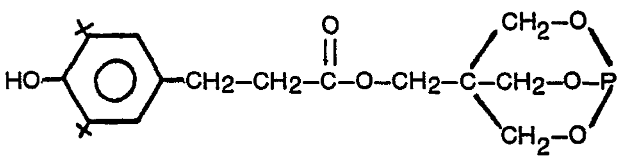 +) | 85 |
| 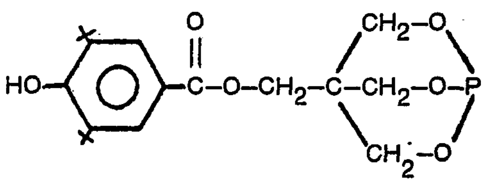 +) | 89 |

+) Verbindungen nach DE–A– 2 219 695 Beispiel 1 bzw. Beispiel 7
–+ bedeutet den tert. Butylrest)

Beispiel 32

In diesem Beispiel soll die stabilisierende Wirkung der erfindungsgemäßen, Phenolgruppen enthaltenden Phosphite in Polypropylen aufgezeigt werden (Die angegebenen Teile sind Gewichtsteile):

Auf der Zweiwalze wird eine Mischung aus

100 Teilen unstabilisierten Polypropylenpulvers der Dichte 0,90 mit einem Schmelzindex $i_5$ von ca. 6 g/10 min (bestimmt in Anlehnung an ASTM D 1238—62 T),
0,5 Teilen 3,5-Di-tert-butyl-4-hydroxyi-phenyl-propionsäurestearylester und
0,10 Teilen einer der erfindungsgemäßen Verbindungen

bei 200°C fünf Minuten lang homogenisiert. Die Kunststoffschmelze wird sodann bei 200°C zu einer Platte von 1 mm Dicke gepreßt. Aus der erkalteten Platte werden streifenförmige Prüfkörper (100 x 10 x 1 mm) gestanzt. Diese werden zur Bestimmung der Wärmealterungsbeständigkeit in einem Umluft-Trockenschrank in ein motorgetriebenes Gestell mit rotierenden Horden eingehängt und bei gleichmäßiger Frischluftzufuhr einer Temperaturbelastung von 140°C unterworfen. Die Zeit, nach der die Proben zu verspröden beginnen (nach DIN 53 383 gekennzeichnet durch die Bildung verfärbter, trüber, teilweise abbröckelnder Stellen), wird festgehalten. Die Prüfergebnisse sind in nachstehender Tabelle zusammengefaßt:

| Verbindung nach Beispiel Nr. | Standzeit (in Tagen) |
|---|---|
| 1 | 29 |
| 4 | 35 |
| 6 | 37 |
| 19 | 42 |
| ohne (Vergleich) | 15 |

Wie aus der Tabelle zu entnehmen ist, sind die erfindungsgemäßen Substanzen hervorragend zur Stabilisierung von Polyolefinen geeignet.

**Patentansprüche**

1. Verbindungen der allgemeinen Formel

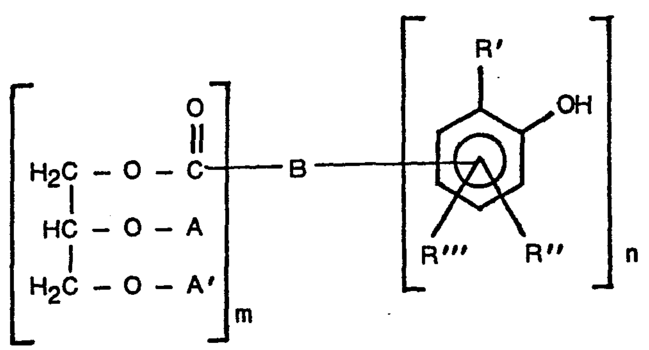

in der A und A′ für je einen einwertigen Rest der Struktur

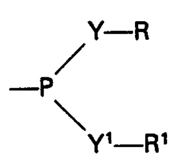

oder zusammen für einen einwertigen Rest der Struktur

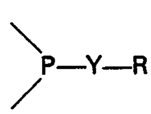

stehen, wobei in diesen Resten

Y = —O—, —S— oder —NR''''— mit R'''' = H oder $C_1$- bis $C_{20}$-Alkyl ist, während

R die Bedeutung eines unverzweigten Alkylrestes mit 12 bis 30 C-Atomen sowie im Falle von Y = —O— auch die eines unverzweigten β-Hydroxyalkylrestes mit 12 bis 30 C-Atomen, oder eines 3-Thia-5-hydroxy-alkylrestes mit 12 bis 32 C-Atomen oder eines Mono- oder Di-$C_{12}$-bis $C_{30}$-Fettsäureesters des Dihydroxylpropylradikals hat, und —$Y^1$—$R^1$ entweder gleich —Y—R ist, oder für einen Rest der Struktur

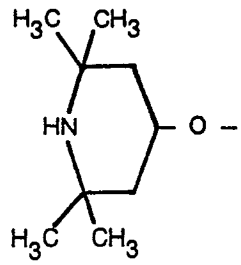 oder 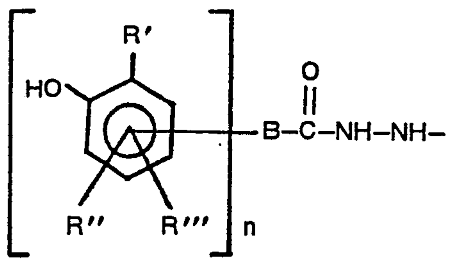

steht,
R', R'' und R''' unabhängig voneinander H oder $C_1$- bis $C_4$-Alkyl bedeuten,

B eine chemische Bindung oder $\alpha$) den Rest eines geradkettigen oder verzweigten, unsubstituierten oder phenylsubstituierten Alkans mit 1 bis 20 C-Atomen oder $\beta$) eines unsubstituierten oder $C_1$- bis $C_5$-alkylsubstituierten, cycloaliphatischen Alkans mit 5 bis 12 C-Atomen, oder $\gamma$) eines unsubstituierten oder $C_1$- bis $C_{12}$-alkylsubstituierten aromatischen Kohlenwasserstoffes mit 6 oder 10 C-Atomen, oder $\delta$) eine Gruppe —B'—O—B''—, oder $\varepsilon$) eine Gruppe $—B'—\overset{\overset{O}{\|}}{C}—O—B''—$ darstellen soll, wobei B' eine chemische Bindung oder der Rest eines geradkettigen, verzweigten oder cyclischen, unsubstituierten oder phenylsubstituierten Alkans mit 1 bis 20 C-Atomen oder eines unsubstituierten oder alkylsubstituierten Benzolkerns ist, und B'' eine chemische Bindung oder einen geradkettigen oder verzweigten Alkylenrest mit 1 bis 6 C-Atomen bedeutet und sowohl m als auch n = 1 oder 2 ist.

2. Verbindungen nach Anspruch 1, dadurch gekennzeichnet, daß

Y = —O— ist und
R die Bedeutung eines geradkettigen Alkyl- oder $\beta$-Hydroxyalkylrestes mit 12 bis 30 C-Atomen hat,
—Y¹—R¹ gleich —Y—R ist
und der Hydroxyphenylcarbonsäurerest die Struktur

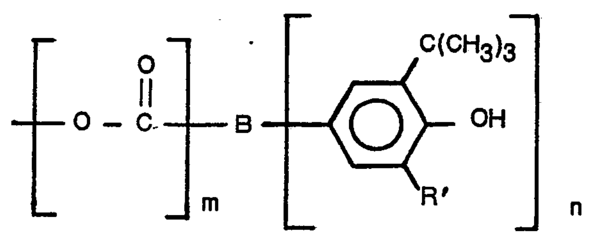

besitzt, wobei B, R', m und n die in Anspruch 1 angegebene Bedeutung haben.

3. Verbindungen nach Anspruch 2, dadurch gekennzeichnet, daß der Hydroxyphenylcarbonsäurerest die Struktur

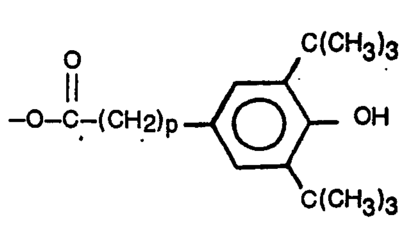 oder 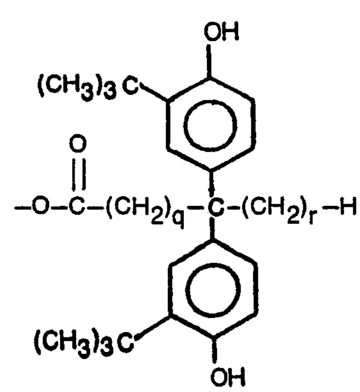

mit p, q = 0; 1; 2 oder 3 und r = 0; 1 besitzt.

4. Verfahren zur Herstellung der Verbindungen nach den Ansprüchen 1 bis 3, dadurch gekennzeichnet, daß man in einer Schmelze von mindestens 1 Mol und maximal 4 Mol einer Verbindung der allgemeinen Formel

H—Y—R,

in welcher Y und R die in Anspruch 1 angegebene Bedeutung haben, 1 Mol einer Phenolcarbonsäure bzw. Phenoldicarbonsäure der Formel

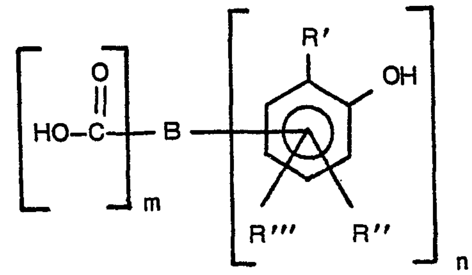

in der die Variablen R', R'', R''', B, m und n die in Anspruch 1 festgelegte Bedeutung haben, bei 50 bis 150°C an die äquivalente Menge Glycid in Gegenwart von 0,01 bis 5,0 Gew.-%, bezogen auf Glycid, eines basischen oder sauren Katalysators addiert, und das gebildete Additionsprodukt bei 80 bis 210°C durch Zugabe von 1 oder 2 Mol eines Tri-niedrigalkyl- oder -arylphosphites mit der R—Y—H-und gegebenenfalls einer in Anspruch 1 definierten $R^1$—$Y^1$—H-Komponente unter Abspaltung des leichtflüchtigen Alkohols oder Phenols über Phosphitester-Bindungen verknüpft.

5. Verwendung der Verbindungen nach den Ansprüchen 1, 2 oder 3 zum Stabilisieren von Thermoplasten auf der Basis von Homo- und Copolymerisaten halogenfreier $C_2$-bis $C_4$-$\alpha$-Olefine oder von chlorhaltigen Vinyl-Homo- und Copolymerisaten gegen die schädigende Einwirkung von Licht und Wärme in einer Menge von 0,005 bis 5,0 Gewichtsteilen auf 100 Gewichtsteile Polymerisat, gegebenenfalls im Gemisch mit weiteren Licht- und Wärmestabilisatoren.

6. Stabilisatorkombination für Polymerisate und Copolymerisate halogenfreier $C_1$- bis $C_4$-$\alpha$-Olefine, bestehend aus 0,005 bis 5,0 Gewichtsteilen einer oder mehrerer Verbindungen nach Anspruch 1, 2 oder 3, 0,05 bis 30 Gewichtsteilen eines bekannten phenolischen Stabilisators, 0 bis 30 Gewichtsteilen eines bekannten sulfidischen Stabilisators, 0 bis 30 Gewichtsteilen eines ebenfalls bekannten Ultraviolett-Stabilisators und 0 bis 5 Gewichtsteilen eines bekannten Phosphits.

7. Stabilisatorkombination für chlorhaltige Vinyl-Homo- und Copolymerisate, bestehend aus 0,005 bis 5,0 Gewichtsteilen einer oder mehrerer Verbindungen nach Anspruch 1, 2 oder 3, 0,1 bis 50 Gewichtsteilen von als Stabilisatoren bekannten Metallseifen, 0,1 bis 50 Gewichtsteilen eines bekannten Epoxidstabilisators, und 0 bis 10 Gewichtsteilen eines mehrwertigen Alkohols.

**Revendications**

1. Composés répondant à la formule générale

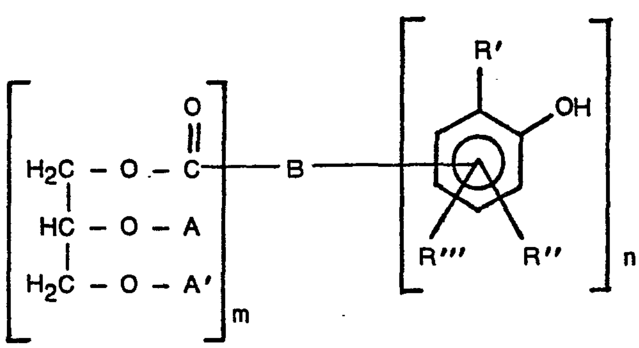

dans laquelle

A et A' représentent chacun un radical monovalent ayant la structure suivante:

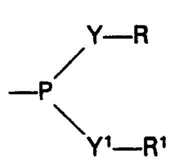

ou forment ensemble un radical monovalent ayant la structure suivante:

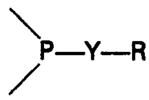

les divers symboles présents dans ces radicaux ayant les significations suivantes:
Y représente —O—, —S— ou —NR''''—, ce symbole R'''' désignant H ou un alkyle en $C_1$—$C_{20}$, R désigne un radical alkyle non ramifié contenant de 12 à 30 atomes de carbone et, dans le cas où Y représente —O—, peut également désigner un radical β-hydroxyalkyle non ramifié contenant de 12 à 30 atomes de carbone ou un radical thia-3 hydroxy-5 alkyle contenant de 12 à 32 atomes de carbone ou le radical d'un monoester ou d'un diester d'acide gras en $C_{12}$—$C_{30}$ du radical dihydroxypropyle, et —$Y^1$—$R^1$ est identique à —Y—R ou représente un radical ayant la structure

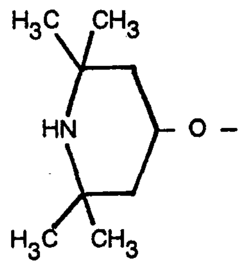

ou

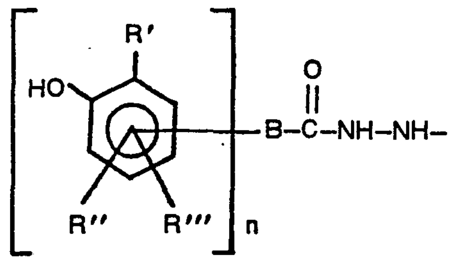

R', R'' et R''' représentent chacun, indépendamment les uns des autres, H ou un alkyle en $C_1$—$C_4$, représente une liaison chimique ou α) le radical d'un alcane en $C_1$—$C_{20}$, linéaire ou ramifié, non substitué ou porteur d'un substituant phénylique, ou β) le radical d'un alcane cycloaliphatique en $C_5$—$C_{12}$, non substitué ou porteur d'un alkyle en $C_1$—$C_5$, ou γ) le radical d'un hydrocarbure aromatique en $C_6$ ou $C_{10}$, non substitué ou porteur d'un alkyle en $C_1$—$C_{12}$, ou δ) un groupement —B'—O—B'', ou ε) un groupement $-B'-\overset{O}{\overset{\|}{C}}-O-B''-$, B' désignant une liaison chimique ou le radical d'un alcane en $C_1$—$C_{20}$, linéaire, ramifié ou cyclique, non substitué ou porteur d'un substituant phénylique, ou le radical d'un noyau benzénique non substitué ou porteur d'un substituant alkylique, et B'' représentant une liaison chimique ou un radical alkylène en $C_1$—$C_6$, linéaire ou ramifiée, et

m et n sont égaux chacun à 1 ou à 2.

2. Composés selon la revendication 1, dans lesquels Y représente —O—, R représente un radical alkyle ou β-hydroxy-alkyle linéaire contenant de 12 à 30 atomes de carbone, —$Y^1$—$R^1$ est identique à —Y—R et le radical d'acide hydroxyphényl-carboxylique répond à la formule:

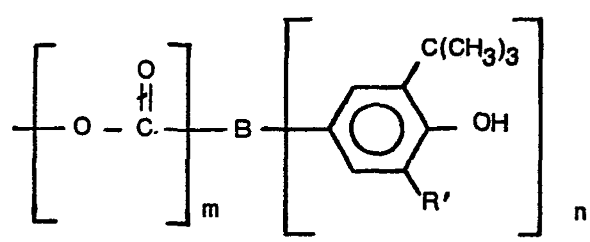

dans laquelle B, R', m et n ont les significations données à la revendication 1.

3. Composés selon la revendication 2, dans lesquels le radical d'acide hydroxyphényl-carboxylique répond à l'une des formules suivantes:

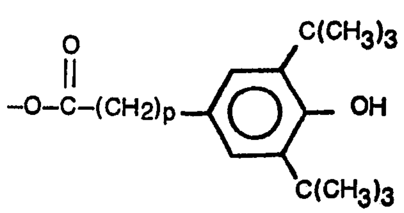

et

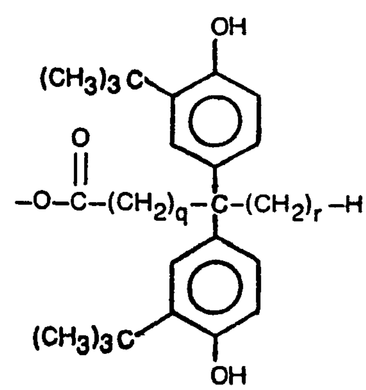

dans lesquelles p et q sont égaux chacun à 0, à 1, à 2 ou à 3 et r est égal à 0 ou à 1.

4. Procédé de préparation de composés selon l'une quelconque des revendications 1 à 3, caractérisé en ce que, dans une masse fondue constituée d'au moins 1 mole et d'au plus 4 moles d'un composé répondant à la formule générale

H—Y—R

dans laquelle Y et R ont les significations données à la revendication 1, on fixe 1 mole d'un acide phénol-carboxylique ou phénol-dicarboxylique répondant à la formule

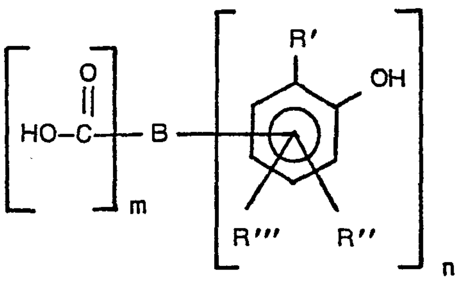

dans laquelle R', R'', R''', B, m et n ont les significations données à la revendication 1, à une température de 50 à 150°C, sur la quantité équivalente de glycide, en présence de 0,01 à 5,0% en poids, par rapport au glycide, d'un catalyseur basique ou acide, et on unit le produit d'addition formé, par des liaisons d'esters phosphoreux, à une température de 80 à 210°C, par addition de 1 ou 2 moles d'un phosphite de tri-alkyle inférieur ou de tri-aryle, avec la composante R—Y—H et, éventuellement, une composante $R^1$—$Y^1$—H définie à la revendication 1, avec enlèvement de l'alcool volatil ou du phénol.

5. Utilisation des composés selon l'une quelconque des revendications 1, 2 et 3, pour la stabilisaton de matières thermoplastiques à base d'homopolymères et de copolymères d'$\alpha$-oléfines en $C_2$—$C_4$ non halogénées ou d'homopolymères et de copolymères vinyliques chlorés, contre les effets destructeurs de la lumière et de la chaleur, et une quantité de 0,005 à 5,0 parties en poids pour 100 parties en poids de polymère, éventuellement en mélange avec d'autres stabilsants à la lumière et à la chaleur.

6. Association stabilisante pour polymères et copolymères d'$\alpha$-oléfines en $C_1$—$C_4$ dépourvues d'halogènes, association constituée de 0,005 à 5,0 parties en poids d'un ou de plusieurs composés selon l'une quelconque des revendications 1, 2 et 3, de 0,05 à 30 parties en poids d'un stabilisant phénolique connu, de 0 à 30 parties en poids d'un sulfure stabilisant connu, de 0 à 30 parties en poids d'un stabilisant aux ultraviolets, également connu, et de 0 à 5 parties en poids d'un phosphite connu.

7. Association stabilisante pour homopolymères et copolymères vinyliques chlorés, association constituée de 0,005 à 5,0 parties en poids d'un ou plusieurs composés selon l'une quelconque des revendications 1, 2 et 3, de 0,1 à 50 parties en poids de savons métalliques connus comme stabilisants, de 0,1 à 50 parties en poids d'un stabilisant époxydique connu et de 0 à 10 parties en poids d'un polyol.

**Claims**

1. Compounds of the formula

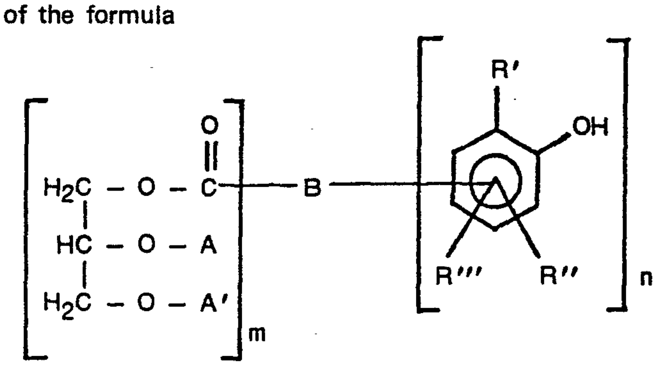

in which A and A' each are a monovalent radical of the structure

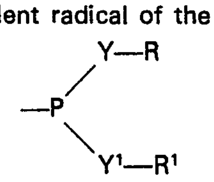

or, together represent a monovalent radical of the structure

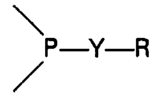

in which radicals

Y is —O—, —S— or —NR''''— (R'''' = H or $C_1$ to $C_{20}$-alkyl); R is a linear alkyl group having from 12 to 30 carbon atoms or, in the case of Y = —O—, alternatively a linear β-hydroxyalkyl group having from 12 to 30 carbon atoms, or a 3-thia-5-hydroxyalkyl group having from 12 to 32 carbon atoms, or a mono- or di-$C_{12}$ to $C_{30}$-fatty acid ester of the dihydroxypropyl radical;

—$Y^1$—$R^1$ is either —Y—R or a radical of the structures

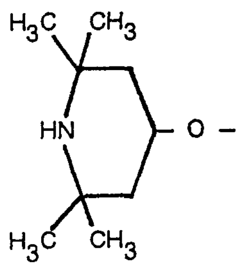

or

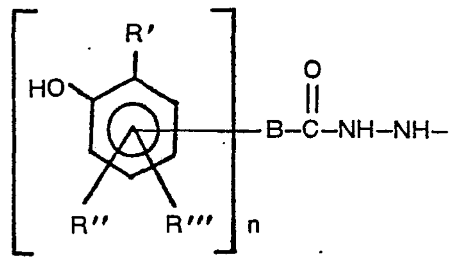

.

R', R'' and R''', independently from each other, are H or $C_1$ to $C_4$-alkyl;

B is a chemical bond or α) the radical of a linear or branched, unsubstituted or phenylsubstituted alkane having from 1 to 20 carbon atoms or β) of an unsubstituted or $C_1$—$C_5$-alkylsubstituted cycloaliphatic alkane having from 5 to 12 carbon atoms, or γ) or an unsubstituted or $C_1$—$C_{12}$-alkylsubstituted aromatic hydrocarbon having 6 or 10 carbon atoms, or δ) a —B'—O—B'' group, or ε) a $B'—\overset{O}{\overset{\|}{C}}—O—B''$ group; B' being a chemical bond or the radical of a linear, branched or cyclic, unsubstituted or phenylsubstituted alkane having from 1 to 20 carbon atoms or of an unsubstituted or alkylsubstituted benzene nucleus, and B'' being a chemical bond or a linear or branched alkylene radical having from 1 to 6 carbon atoms; and

m and n each are either 1 or 2.

2. Compounds as claimed in claim 1, wherein Y is —O—, and R stands for a linear alkyl or β-hydroxyalkyl radical having from 12 to 30 carbon atoms, —$Y^1$—$R^1$ is —Y—R, and the hydroxyphenylcarboxylic acid radical has the following structure

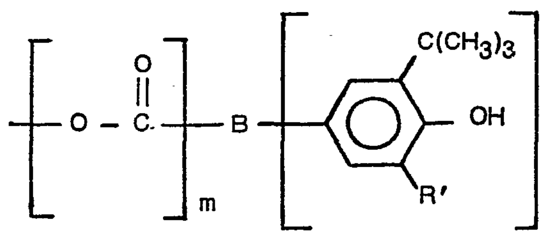

in which B, R', m and n are as defined in Claim 1.

3. Compounds as claimed in Claim 2, wherien the hydroxyphenylcarboxylic acid radical has the structures

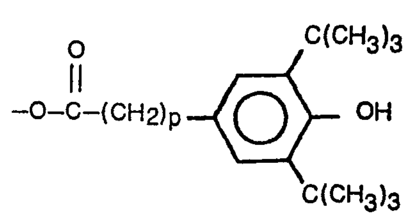

or

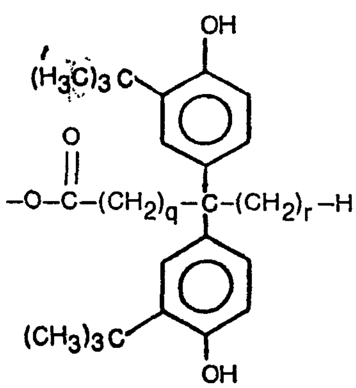

in which p, q each are zero, 1, 2 or 3, and r is zero or 1.

4. A process for the preparation of the compounds as claimed in CLaims 1 to 3, which comprises adding in a melt of at least 1 mol and a maximum of 4 mols of a compound of the formula

H—Y—R

in which Y and R are the same as in claim 1; 1 mol of a phenolcarboxylic acid or phenoldicarboxylic of the formula

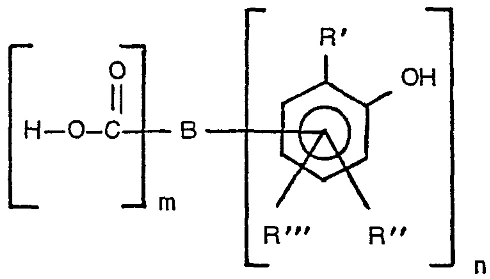

in which the variables R′, R″, R‴, B, m and n are the same as in claim 1 at 50 to 150°C, in the presence of 0.01 to 5.0 weight % (relative to glycide used) of a basic or acidic catalyst, to the equivalent amount of glycide, and linking the addition product obtained via phosphite ester bonds by addition of 1 or 2 moles of a tri-lower-alkyl or -aryl phosphite at 80 to 210°C with splitting-off the easily volatile alcohol or phenol to the H—Y—R and optionally a H—$Y^1$—$R^1$ component, the latter being defined in claim 1.

5. Use of the compounds claimed in claims 1, 2 or 3 for stabilizing thermoplastics on the basis of homo- or copolymers of halogen free $C_{2-4}\alpha$-olefins or chlorine-containing vinyl homo- or copolymers against the damaging action of heat and light, in an amount of from 0.005 to 5.0 parts by weight, calculated on 100 parts by weight of the polymer, optionally together with other heat and light stabilizers.

6. A stabilizer composition for polymers and copolymers of halogen-free $C_{2-4}\alpha$-olefins, consisting of from 0.005 to 5.0 parts by weight of one or more compounds as claimed in claim 1, 2 or 3, from 0.05 to 30 parts by weight of known phenolic stabilizer, from 0 to 30 parts by weight of a known sulfidic stabilizer, from 0 to 30 parts by weight of a known ultraviolet stabilizer and from 0 to 5 parts by weight of a known phosphite.

7. A stabilizer composition for chlorine-containinng vinyl homo- and copolymers, consisting of from 0.005 to 5.0 parts by weight of one or more compounds as claimed in claim 1, 2 or 3, from 0.1 to 50 parts by weight of a known metal soap stabilizer, from 0.1 to 50 parts by weight of a known epoxy stabilizer and from 0 to 10 parts by weight of a polyol.